Europäisches Patentamt

European Patent Office

Office européen des brevets

(11) Publication number: **0 138 877**
**B1**

## EUROPEAN PATENT SPECIFICATION

(45) Date of publication of patent specification: **01.07.87**

(21) Application number: **84901109.3**

(22) Date of filing: **20.03.84**

(86) International application number:
**PCT/NO84/00015**

(87) International publication number:
**WO 84/03687 27.09.84 Gazette 84/23**

(51) Int. Cl.⁴: **B 65 G 35/00** // A01K97/00, B63B35/14

(54) **CONVEYER SYSTEM.**

(30) Priority: **25.03.83 NO 831077**

(43) Date of publication of application:
**02.05.85 Bulletin 85/18**

(45) Publication of the grant of the patent:
**01.07.87 Bulletin 87/27**

(84) Designated Contracting States:
**BE FR GB NL**

(56) References cited:
**NO-B- 133 053**
**NO-B- 148 978**

(73) Proprietor: **BJÖRSHOL, Kolbjörn**
**N-6560 Langöyneset (NO)**

(72) Inventor: **BJÖRSHOL, Kolbjörn**
**N-6560 Langöyneset (NO)**

(74) Representative: **Warren, Anthony Robert et al**
**BARON & WARREN 18 South End Kensington**
**London W8 5BU (GB)**

Courier Press, Leamington Spa, England.

## Description

The present invention relates to a conveyor system for an element which is provided with freely suspended projections or tails formed from thread and spaced along the length of the element. By way of examples of such an element, mention is particularly made of long fishing lines in which the projections are constituted by snoods, and pelt like textiles in which the projections are constituted by the hairs or fluff.

According to the invention, a conveyor system of the type referred to above is characterised by an endless tightly wound helical spring disposed about turning rollers, and means for introducing a projection between two adjacent windings of the spring as the windings spread apart upon the spring moving about a turning roller. Hence, when the spring is subjected to bending upon travelling about the turning roller, the projection enters the interstice between the two adjacent windings which again close together when the spring straightens, upon travelling between the turning rollers, so that the projection is firmly held.

It has previously been suggested to use helical springs to keep fishing hooks or snoods in a retainer, the individual hook legs or snoods being pinched between two adjacent windings in the spring, but in such a case the hook legs must be manually forced in between the spring windings and again forced out. Consequently, the systems are not suited for continous movement of the hooks, but merely to retain the same.

The invention may be utilised as a component of equipment for the continuous conveyance of a fishing line from one place at which the line is stored for baited to another place at which the line is fed into the sea.

In order that the present invention may be more readily understood, reference will now be made to the accompanying drawings, in which:—

Figure 1 is a view of a helical spring conveyor constructed in accordance with the invention,

Figure 2 is a sectional view at right angles to the axis of the helical spring,

Figure 3 is a side view of a system embodying the conveyor,

Figure 4 is a top view of the system shown in Figure 3,

Figure 5 is a side view of another system embodying a conveyor according to the invention,

Figure 6 is a side view, on a larger scale of the system shown in Figure 5, and

Figure 7 is a top view of the system shown in Figures 5 and 6.

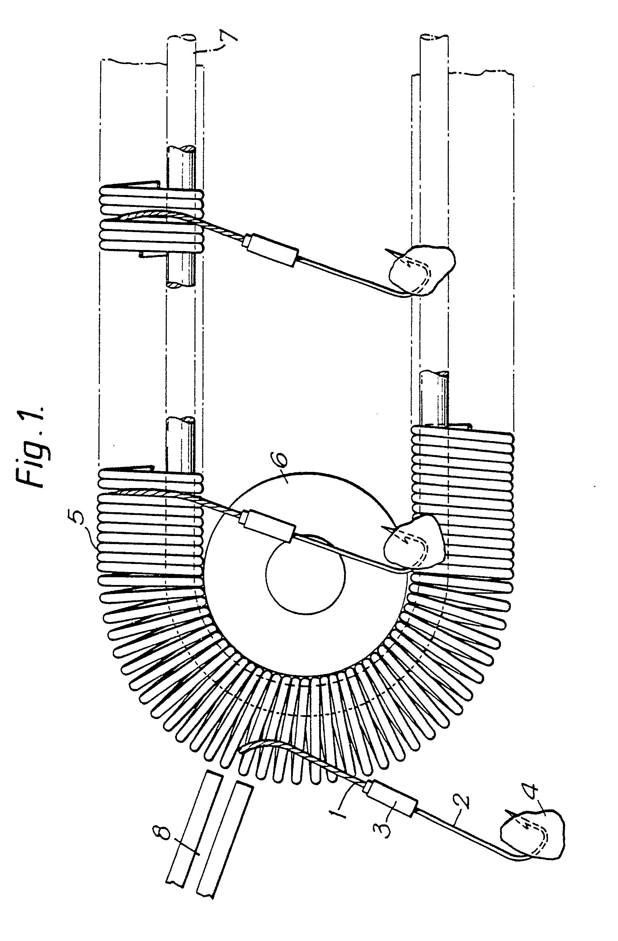

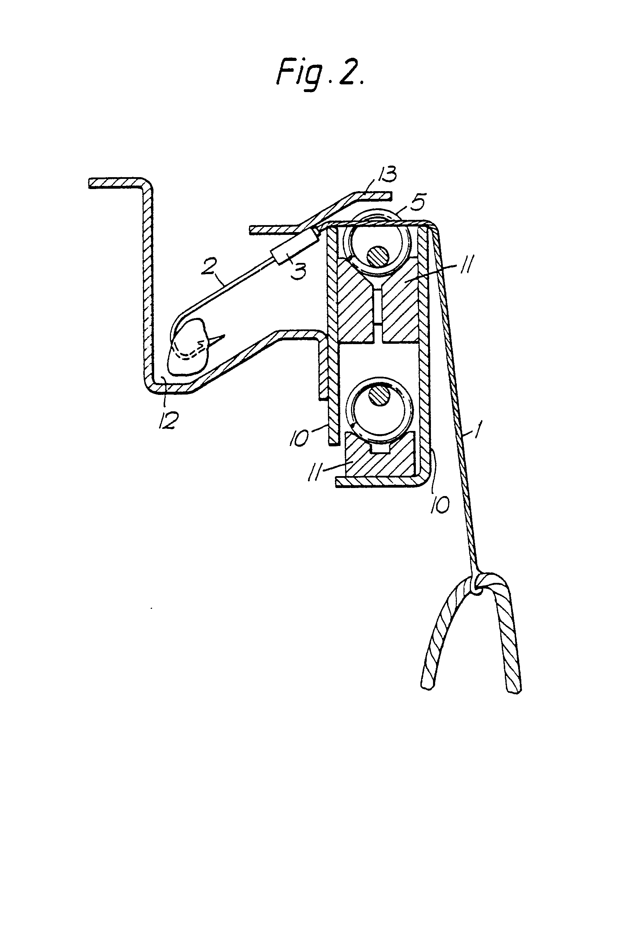

Figures 1 and 2 show one embodiment of the conveyor system according to the invention, adapted for the conveyance of a line, not shown, which is provided with snoods 1 in spaced arrangment along the length of the line, and each provided with a fishing hook 2 secured to its snood 1 by means of a snood head 3. Each of the hooks 2 is shown as provided with a bait 4.

The conveyor system consists of a tightly wound helical tension spring 5 which is spliced so as to operate as an endless belt and is disposed about a pair of turning rollers 6. The spring 5 is kept tight by a solid element, such as a wire 7, which is enclosed in the spring.

In the drawing merely one end, the insertion end of the system is shown, it being assumed that the other end, the extraction end is made in the same manner as the insertion end.

The turning rollers 6 are made with such a diameter that, as the spring 5 moves thereabout, it is subjected to bending so that the windings are spread apart, thereby producing a space between each pair of adjacent windings which permits a snood 1 to be fed from a guide slot 8 into one such space and be released. When the spring 5 leaves the insertion turning roller, the spaces between adjacent windings are again closed and the snood is pinched until the windings in question open again at the extraction end of the system.

As shown in Fig. 2, the spring 5 passes between two plates 10 and rests upon guides 11. The hooks 2 with their baits 4 are advanced in a chute 12 at the side of the spring 5. A guide rail 13 is mounted above the spring 5 and prevents the spring 5 from surmounting the top edge of the side plates 10, at the same time as the rail 13 keeps each of the hooks 2 with its bait 4 in the chute 12.

In systems for the automatic baiting of fishing lines, it is usual to effect the baiting whilst rapidly advancing the hooks, with the speed at which the line is fed into the sea, i.e. the speed of the vessel. This means that the hooks enter their bait at a speed which may be of the order 3 to 5 m/sec. Such a speed makes great demands on the baits and the consistence of the baits, as a great hook speed easily may cause the hook to be torn out of the bait or the bait is not sufficiently secured to the hook. When feeding the line into the sea, the bait may easily be shaken off the hook, either because the baits are insufficiently secured or because the line is alternately tightened and slackened while baiting the individual hooks, i.e. upwards to 3 to 4 times per second.

Consequently, it is advantageous if the hook speed during the baiting can be reduced, as thereby a better control of the baiting as obtained, so that the demands on bait and bait consistency can be reduced. This can be achieved by placing a buffer at the side of the baiting apparatus or between the same and the place where the line is fed into the sea, so that the baiting proper may be effected at a constant speed, independently of variations in the speed of the vessel, such as, due to sea conditions. Such a buffer also will reduce the tightening and slackening of the line with the result that shaking off of the bait from its hook is avoided. In this manner the relationship between the hook speed during the baiting and the feeding out speed of the line which may be achieved by the use of a buffer may be from 1/10 to 1/20.

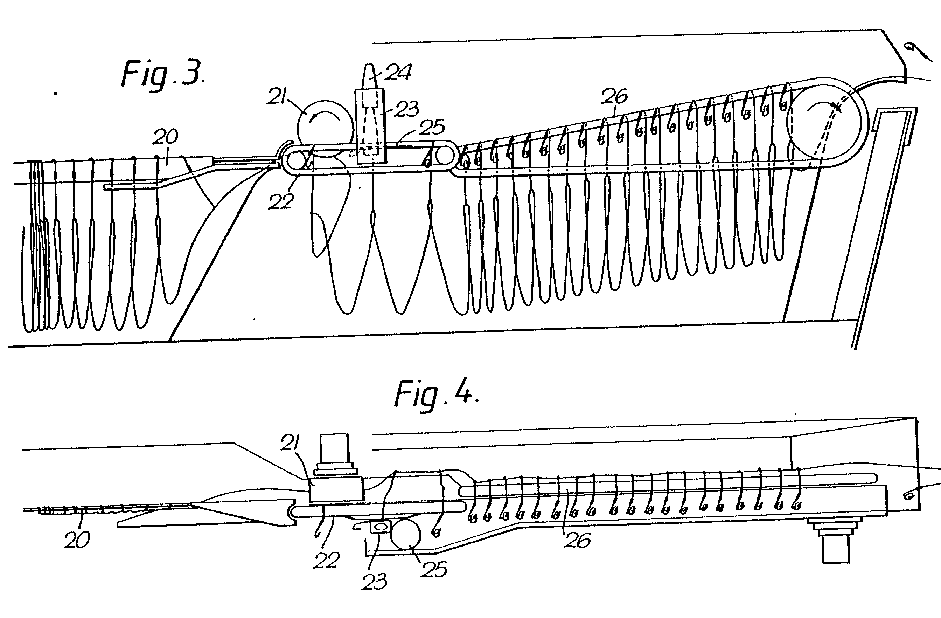

A system in which a buffer region is obtained by means of a conveyor system according to the invention is schematically shown in the Figures 3 and 4 of the accompanying drawings.

In this system, a line which is provided with snoods 1 and hooks 2 is suspended from a guide rail 20 of any known type. By means of a driven roller 21, the line is drawn towards the feed out point at the stern of the vessel, to the right in the drawing. At the same time, the snoods with their hooks are advanced to a conveyor 22, for instance, a spring system as shown in Fig. 1, a catch conveyor or a driven disc provided with catch means which transports each snood with its hook to a baiting apparatus 23 with a distance between the hooks which is adapted to the speed of operation of such apparatus, for instance, 10 to 15 cm. In the apparatus 23, bait 24 is delivered downwardly to a knife 25 which cuts the bait so that the hook is passed into a ready cut piece of bait.

When the hook is baited, it is delivered to a buffer conveyor 26 by means of the conveyor 22. The conveyor 26 may, possibly, be an extension of the conveyor 22, but is shown as being constructed similarly to the system described with reference to Figs. 1 and 2. By means of this system, the line with baited hooks is fed towards the stern of the vessel where the line is torn out of the spaces between the spring windings and fed into the sea in the conventional manner.

In the system shown in Figs. 3 and 4 in which the conveyor system 22 and the buffer conveyor 26 are two separate units, the speeds of the two conveyors may be so adjusted that the distance between the individual hooks in the conveyor 22 is substantially greater, for instance, 2 to 3 times, than the distance between the hooks in the conveyor 26, in which the distance, in practice, may be as small as 4 to 5 cm, with a correspondingly greater number of hooks fastened in the conveyor.

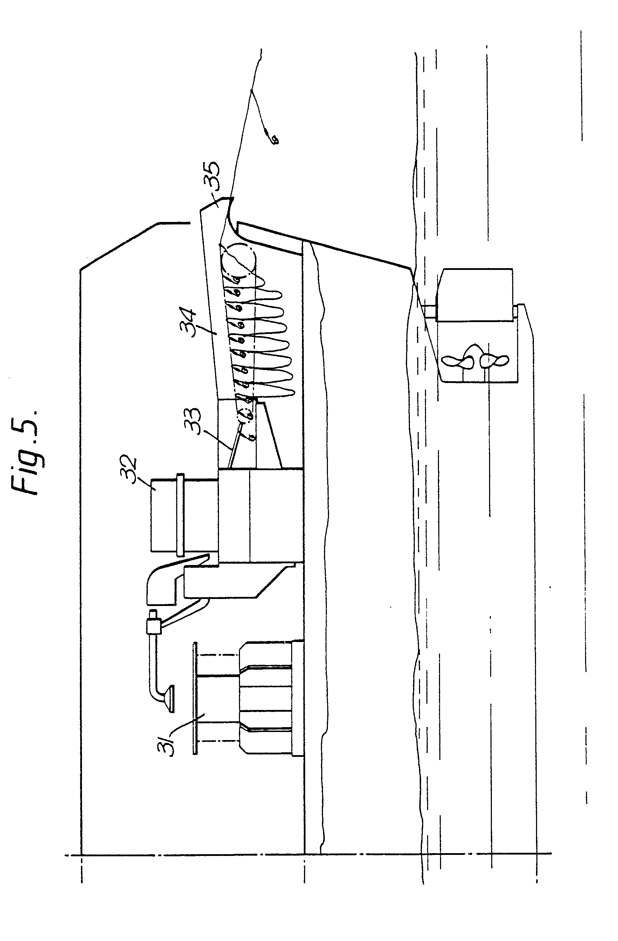

Figures 5, 6 and 7 illustrate another system in which the conveyor system is adapted to cooperate with a baiting machine which is supplied with line from a line spool. In this case the conveyor system serves both as a conveyor and as a buffer store for baited line.

Due to waves, the speed of the vessel may vary substantially. The present system makes it possible to operate the baiting machine with an approximately constant speed equal to the mean speed of the vessel.

Due to short distance between the hooks in the conveyor, the line proper will be hanging from each hook, as indicated in Fig. 5, as the conveyor speed is far less than the speed of the vessel. The relation between the two speeds may be about 1:20. This means a conveyor speed of about 0,2 to 0,3 m/sec. At such a speed the baited hooks may be inspected before being fed into the sea, with the advantages involved thereby.

In the system as shown in the Figs. 5 to 7, 31 is a spool which is adapted to receive a fishing line provided with snoods and hooks in conventional manner.

From the spool 31, the line is fed to a baiting machine 32 which, possibly, may be combined with an apparatus for hooking the individual snoods and which is provided with outlet 33 which supplies the baited line to a conveyor system which is generally designated 34 and which is more closely described above with reference to the Figures 1 and 2.

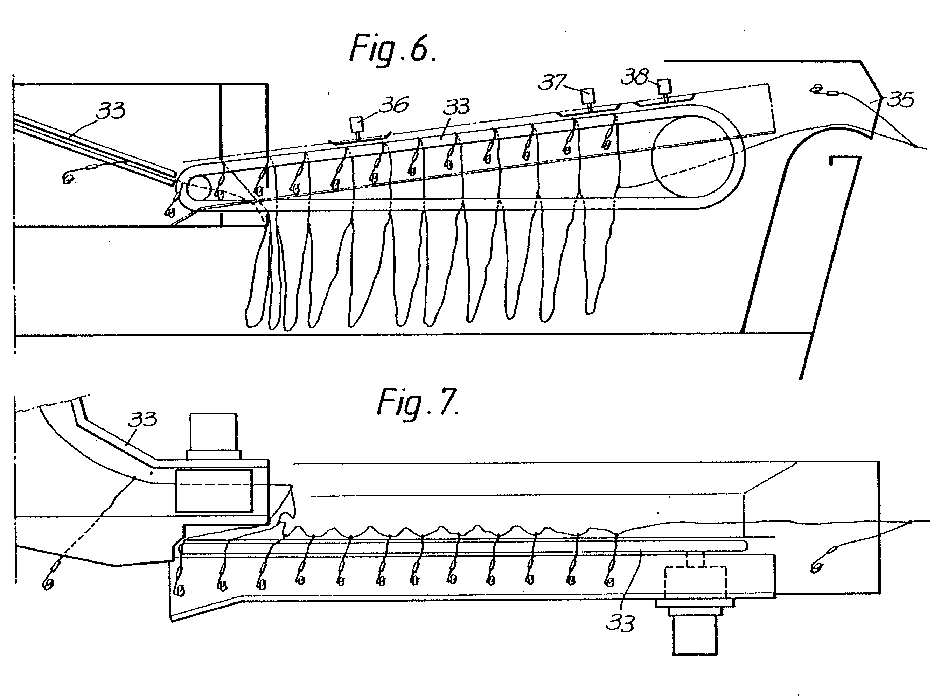

The conveyor catches, in turn, the individual snoods 1 and holds them during passage towards the stern 35. Hereby the snoods with baited hooks are hanging to one side of the conveyor, as shown in Fig. 7, while the rest of each individual snood and the entire line hang on the other side. The snoods leave, in turn, the conveyor and the line is fed over the stern 35 by pull on the line, with a speed which is adjusted in relation to the speed of the baiting machine and the speed of the vessel through the sea.

As shown in Fig. 6, the conveyor system 34 is provided with feelers 36 and 37 for the adjustment of the conveyor speed in dependency of the filling in the conveyor system. Further, a feeler 38 is arranged for arresting the baiting machine 32 and the conveyor system 34 when the latter is full.

## Claims

1. A conveyor system for an element which has freely suspended projections (1) formed from thread and spaced along the length of the element such as a fishing line having freely suspended snoods, characterised by an endless tightly wound helical spring (5) disposed about turning rollers (6), and means (8) for introducing a projection (1) between two adjacent windings of the spring (5) as the windings spread apart upon the spring moving about a turning roller (6).

2. A system as claimed in claim 1, characterised by a longitudinal solid element (7) enclosed within the helical spring (5).

3. A system as claimed in claim 1 or 2 for use in connection with fishing line baiting apparatus, characterised in that the introducing means comprises slot means (8, 33) arranged to feed the projections (1) from the baiting apparatus (32) to the helical spring (5, 34).

4. A system as claimed in claim 3, characterised by means (36, 37, 38) for adjusting the relative speeds of the helical spring conveyor and the baiting apparatus.

5. A system as claimed in any preceding claim, characterised in that it is associated with baiting apparatus (32) for long line fishing lines.

6. A system as claimed in any preceding claim, characterised in that the helical spring conveyor is split into a pair of springs (22, 26) operated in series at different conveyance speeds.

## Patentansprüche

1. Fördersystem für ein Element, das freihängende Enden (1) hat, die über die Länge des Elements, wie zum Beispiel einer Fischleine, angeordnet sind und freihängende Vorfächer aufweisen, gekennzeichnet durch eine endlos enggewundene Spiralfeder (5), die um drehende Laufrollen (6) angeordnet ist, und eine Führung (8) für das Einbringen eines der Enden (1) zwischen zwei benachbarte Windungen der Feder (5), wenn die Windungen in der Bewegung um eine drehende Rolle (6) gespreizt werden.

2. Fördersystem nach Anspruch 1, gekennzeichnet durch ein längliches kompaktes Element (7) in Anordnung innerhalb der Spiralfeder (5).

3. Fördersystem nach Anspruch 1 oder 2 für die Verwendung mit einem Fischleinen-Geschirr, dadurch gekennzeichnet, daß die Führung eine Schlitzführung (8, 33) für die Zuführung der Enden (1) des Geschirrs (32) zur Spiralfeder (5, 34) ist.

4. Fördersystem nach Anspruch 3, gekennzeichnet durch eine Anordnung (36, 37, 38) zur Justierung der relativen Geschwindigkeit von Spiralfeder-Fördersystem und Fanggeschirr.

5. Fördersystem nach einem der vorhergehenden Ansprüche, dadurch gekennzeichnet, daß das System einen Fanggeschirr (32) für Langleinen-Fischerei zugeordnet ist.

6. Fördersystem nach einem der vorhergehenden Ansprüche, dadurch gekennzeichnet, daß das Spiralfeder-Fördersystem in ein Paar Federn (22, 26) unterteilt ist, die in Serie angeordnet mit unterschiedlichen Fördergeschwindigkeiten betrieben werden.

**Revendications**

1. Système transporteur pour un élément qui comporte des projections (1) en suspension libre qui sont formées de fil et sont espacées sur la longueur de l'élément, comme une ligne de pêche présentant des avançons librement suspendus, caractérisé par un ressort héliocoïdal sans fin (5) enroulé de manière serrée et disposé autour de rouleaux de renvoi (6), et par des moyens (8) pour introduire une projection (1) entre deux spires adjacentes du ressort (5) lorsque les spires s'écartent l'une de l'autre au cours du déplacement du ressort autour d'un rouleau de renvoi (6).

2. Système suivant la revendication 1, caractérisé par un élément solide longitudinal (7) enfermé à l'intérieur du ressort hélicoïdal (5).

3. Système suivant l'une des revendications 1 et 2 à mettre en oeuvre avec un appareil d'amorçage de ligne de pêche, caractérisé en ce que les moyens d'introduction comprennent un moyen de fente (8, 33) agencé pour alimenter les projections (1) de l'appareil d'amorçage (32) au ressort hélicoïdal (5, 34).

4. Système suivant la revendication 3, caractérisé par des moyens (36, 37, 38) prévus pour ajuster les vitesses relatives du transporteur à ressort hélicoïdal et de l'appareil d'amorçage.

5. Système suivant l'une quelconque des revendications précédentes, caractérisé en ce qu'il est associé avec un appareil d'amorçage (32) pour des lignes de pêche à longue ligne.

6. Système suivant l'une quelconque des revendications précédentes, caractérisé en ce que le transporteur à ressort hélicoïdal est divisé en une pair de ressorts (22, 26) qui sont mis en oeuvre en série à des vitesses de transport différentes.

Fig. 1.

# Fig . 2.

Fig. 3.

Fig. 4.

# Fig.5.

0 138 877

Fig.6.

Fig.7.

0 138 877